# EUROPÄISCHE PATENTANMELDUNG

(11) **EP 4 811 155 A1**
(43) Veröffentlichungstag der Anmeldung: **23.09.2026**
(21) Anmeldenummer: 25165348.1
(22) Anmeldetag: 21.03.2025
(51) Int. Cl.: G06F 16/242, G06F 16/38, G06F 16/2452, G06F 16/248, G16Y 30/10, G06F 16/22

(54) **VERFAHREN ZUR ABFRAGE UND VERARBEITUNG VON PROZESSINFORMATIONEN UND AUTOMATISIERUNGSANORDNUNG**

(71) Anmelder: Siemens Aktiengesellschaft, 80333 München (DE)
(72) Erfinder: Kiebler, Clemens, 09113 Chemnitz (DE); Schneider, Dirk, 08115 Lichtentanne (DE)
(74) Vertreter: Siemens Patent Attorneys

(57) **Zusammenfassung**

Die Erfindung betrifft ein Verfahren zur Abfrage und Verarbeitung von Prozessinformationen (Pi) in einem industriellen Prozessnetzwerk (NW), wobei die Prozessinformationen (Pi) einen Datenverbund von zumindest einem Datenpunkt (Dj) aufweisen, umfassend folgende Schritte:
- Implementieren eines Typschemas (TS) zur Definition einer Struktur des Datenverbundes der Datenpunkte (Dj) und deren Attribute;
- Bereitstellen einer Abfragesprache (FQL), die es ermöglicht, die Prozessinformationen (Pi) abzufragen;
- Zuweisen einer Ressourcenkennung (URI) zu jedem Datenpunkt (Dj) innerhalb des Prozessnetzwerks (NW) zur eindeutigen Identifikation;
- Betreiben eines Query-Clients (QC) auf einem Konsumenten (Kon) und eines Query Servers (QS) auf einem Produzenten (Pro) zur Verarbeitung von spezifisch gestellten Abfragen der Prozessinformationen (Pi) bzw. zur Bereitstellung der spezifisch angefragten Prozessinformationen (Pi);
- Betreiben eines Index-Registers (IR) auf dem Produzenten (Pro) zum Verwalten und Indizieren der Ressourcenkennungen (URI),
- Bereitstellen der Ressourcenkennungen (URI) durch einen Protokolladapter (PA) zur Kommunikation über verschiedene Netzwerkschnittstellen (PN,http,mqtt);
- wobei eine Applikation (App) auf dem Konsumenten (Kon) zum Ablauf gebracht wird, welche mittels des Query-Clients (QC) Prozessinformationen (Pi) abfragt.

## Beschreibung

In modernen industriellen Prozessnetzwerken spielt die effiziente Abfrage und Verarbeitung von Prozessinformationen eine zentrale Rolle. Diese Netzwerke umfassen eine Vielzahl von Geräten und Systemen, die kontinuierlich Daten generieren und austauschen. Zu diesen Geräten gehören Sensoren, Aktoren, speicherprogrammierbare Steuerungen (SPS), Mensch-Maschine-Schnittstellen (HMI) und verschiedene andere Automatisierungs-komponenten.

Der aktuelle Stand der Technik in industriellen Prozessnetzwerken basiert hauptsächlich auf proprietären Kommunikationsprotokollen und spezifischen Datenmodellen. Diese Ansätze führen zu mehreren Herausforderungen bei der Abfrage und Verarbeitung von Prozessinformationen:
Verschiedene Geräte und Systeme verwenden oft unterschiedliche Datenformate, was die Integration und Verarbeitung der Daten erschwert. Die Abfrage spezifischer Prozessinformationen erfordert oft detaillierte Kenntnisse über die zugrunde liegenden Datenstrukturen und Kommunikationsprotokolle.

Bestehende Systeme sind häufig starr und erlauben keine dynamische Anpassung an sich ändernde Anforderungen oder die Integration neuer Datenquellen. Aktuelle Abfragemethoden führen oft zu einer Über- oder Unterabfrage von Daten, was zu ineffizienter Netzwerknutzung und erhöhter Verarbeitungszeit führt. Die Verwendung proprietärer Protokolle und Datenmodelle erschwert die nahtlose Kommunikation zwischen Geräten verschiedener Hersteller. Mit der zunehmenden Anzahl von Geräten und dem wachsenden Datenvolumen in industriellen Netzwerken stoßen traditionelle Abfrage- und Verarbeitungsmethoden an ihre Grenzen. Bestehende Systeme bieten oft keine Möglichkeit, Prozessinformationen mit zusätzlichem Kontext oder Metadaten zu verknüpfen, was die Interpretation und Analyse der Daten erschwert.

Diese Probleme und Herausforderungen verdeutlichen den Bedarf an einem flexiblen, effizienten und standardisierten Ansatz für die Abfrage und Verarbeitung von Prozessinformationen in industriellen Prozessnetzwerken.

Es ist Aufgabe der Erfindung eine einfache und effiziente Abfrage zu ermöglichen und die Interoperabilität zu verbessern.

Die vorliegende Erfindung stellt ein Verfahren und eine Automatisierungsanordnung zur effizienten Abfrage und Verarbeitung von Prozessinformationen in einem industriellen Prozessnetzwerk bereit. Die Erfindung adressiert die im Hintergrund beschriebenen Herausforderungen durch einen flexiblen, standardisierten Ansatz.

Ein zentrales Element der Erfindung ist die Implementierung eines Typschemas, das die Struktur der Prozessinformationen und ihrer Attribute definiert. Dieses Schema ermöglicht eine einheitliche Darstellung der Daten über verschiedene Geräte und Systeme hinweg.

Zur Abfrage der Prozessinformationen wird eine spezielle Abfragesprache eingeführt. Diese Sprache erlaubt es, präzise und effiziente Anfragen zu formulieren, ohne detaillierte Kenntnisse der zugrunde liegenden Datenstrukturen zu erfordern.

Demnach wird die Aufgabe dadurch gelöst, das ein Verfahren zur Abfrage und Verarbeitung von Prozessinformationen in einem industriellen Prozessnetzwerk bereitgestellt wird, wobei die Prozessinformationen einen Datenverbund von zumindest einem Datenpunkt aufweisen, umfassend folgende Schritte:
Implementieren eines Typschemas zur Definition einer Struktur des Datenverbundes der Datenpunkte und deren Attribute;
Bereitstellen einer Abfragesprache, die es ermöglicht, die Prozessinformationen abzufragen; Zuweisen einer Ressourcenkennung zu jedem Datenpunkt innerhalb des Prozessnetzwerks zur eindeutigen Identifikation;
Betreiben eines Query-Clients auf einem Konsumenten und eines Query Servers auf einem Produzenten zur Verarbeitung von spezifisch gestellten Abfragen der Prozessinformationen bzw. zur Bereitstellung der spezifisch angefragten Prozessinformationen;
Betreiben eines Index-Registers auf dem Produzenten zum Verwalten und Indizieren der Ressourcenkennungen;
Bereitstellen der Ressourcenkennungen durch einen Protokolladapter zur Kommunikation über verschiedene Netzwerkschnittstellen;
wobei eine Applikation auf dem Konsumenten zum Ablauf gebracht wird, welche mittels des Query-Clients Prozessinformationen abfragt.

Das Typschema definiert die Struktur und die Attribute von Datentypen innerhalb eines Systems. Es beschreibt, wie Daten organisiert sind und welche Art von Informationen sie enthalten. Ein Typschema dient als Vertrag zwischen verschiedenen Systemkomponenten, um sicherzustellen, dass alle Beteiligten die Daten auf dieselbe Weise verstehen und verarbeiten.

Die Applikation oder kurz App kann eine Anwendung, die Prozessinformationen in Echtzeit visualisiert und überwacht. Folgende Beispiele sind denkbar: Eine App, die Maschinendaten analysiert, um potenzielle Ausfälle vorherzusagen und Wartungsempfehlungen zu geben. Eine Anwendung, die Produktionsdaten analysiert und Vorschläge zur Effizienzsteigerung macht. Eine App zur Überwachung und Optimierung des Energieverbrauchs in der Anlage. Eine Anwendung zur Überwachung und Analyse von Qualitätsparametern in Echtzeit. Eine App, die Alarme und Warnungen aus verschiedenen Anlagenteilen zentralisiert und priorisiert. Eine Anwendung zur Analyse und Optimierung von Prozessparametern.

Diese Apps würden den Query-Client nutzen, um über die Abfragesprache (FQL) die benötigten Prozessinformationen abzufragen und zu verarbeiten.

Eine Automatisierungsanordnung, die das Verfahren nutzt umfasst mehrere Automatisierungskomponenten, von denen mindestens eine als Konsument und eine andere als Produzent von Prozessinformationen konfiguriert ist. Auf dem Konsumenten wird ein Query-Client betrieben, während auf dem Produzenten ein Query-Server läuft. Diese Komponenten ermöglichen eine strukturierte Kommunikation zwischen den Geräten.

Sowohl auf dem Konsumenten als auch auf dem Produzenten sind Software-Umgebungen implementiert, die das Typschema und die Abfragesprache beinhalten. Dies gewährleistet eine konsistente Interpretation der Daten und Anfragen auf beiden Seiten.

Ein wichtiger Bestandteil der Erfindung ist das Index-Register auf dem Produzenten. Dieses Register verwaltet und indiziert Ressourcenkennungen, die den einzelnen Datenpunkten im Netzwerk zugewiesen sind. Dadurch wird eine effiziente Identifikation und Lokalisierung der angeforderten Informationen ermöglicht.

Zur Unterstützung verschiedener Kommunikationsprotokolle verfügt der Konsument über einen Protokolladapter. Dieser Adapter ermöglicht die Verwendung der Ressourcenkennungen über unterschiedliche Netzwerkschnittstellen hinweg, was die Flexibilität und Interoperabilität des Systems erhöht.

Die Erfindung löst die im Hintergrund beschriebenen Probleme, indem sie eine standardisierte, flexible und effiziente Methode zur Abfrage und Verarbeitung von Prozessinformationen bereitstellt. Die einheitliche Datenstruktur und Abfragesprache reduzieren die Komplexität bei der Integration verschiedener Geräte und Systeme. Die Abfragesprache ermöglicht einen Datenzugriff, der für den Nutzer prinzipiell unabhängig von der Infrastruktur und dem Speicherort ist. Die Verwendung von Ressourcenkennungen und einem Index-Register optimiert die Datenübertragung und verbessert die Skalierbarkeit. Durch den Protokolladapter wird eine verbesserte Interoperabilität zwischen verschiedenen Netzwerkprotokollen erreicht.

Insgesamt bietet die Erfindung eine umfassende Lösung für die Herausforderungen moderner industrieller Prozessnetzwerke und ermöglicht eine effizientere, flexiblere und skalierbarere Verarbeitung von Prozessinformationen.

Das Typschema und die Abfragesprache sind zentrale Komponenten des vorgestellten Verfahrens zur effizienten Abfrage und Verarbeitung von Prozessinformationen in industriellen Prozessnetzwerken.

Das Typschema definiert die Struktur des Datenverbundes der Datenpunkte und deren Attribute. Es wird in einem standardisierten Format wie YAML oder XML implementiert. Dies ermöglicht eine einheitliche und maschinenlesbare Beschreibung der Datenstrukturen über verschiedene Geräte und Systeme hinweg. Ein Beispiel für ein Typschema in YAML-Format könnte wie folgt aussehen:
yaml

| | | |
|---|---|---|
| Measurement: | | |
| | value: | timestamp-latest |
| | min: | static |
| | max: | static |
| | unit: | static |
| Diagnosis: | | |
| Parameter: | value: | timestamp-latest |
| | measurementMode: | static |

Dieses Beispiel beschreibt 3 Typen im yaml-Format. Der Typ Measurement besitzt 3 zeitlich unveränderliche Attribute: Messbereichsminimum, -maximum und Einheit, wohingegen das Attribut value zeitveränderlich ist und nur der aktuellste Wert bereitgestellt wird.

Jeder Typ hat spezifische Attribute mit definierten Datentypen. Die Verwendung eines solchen Schemas gewährleistet eine konsistente Datenstruktur und erleichtert die Interpretation der Prozessinformationen.

Die Abfragesprache (FQL) ist speziell darauf ausgelegt, Prozessinformationen effizient abzufragen. Sie enthält Schlüsselwörter, die es ermöglichen, spezifische Attribute der Prozessinformationen abzufragen und zu filtern. Ein Beispiel für eine FQL-Abfrage könnte folgendermaßen aussehen:
SELECT value, timestamp
FROM Sensor
WHERE id = "temp_sensor_01"
AND timestamp > "2023-01-01T00:00:00"
LIMIT 100

Diese Abfrage würde die Werte und Zeitstempel der letzten 100 Messungen eines bestimmten Temperatursensors seit dem 1. Januar 2023 abrufen.

Die Abfragesprache umfasst auch Funktionen zur Aggregation und statistischen Analyse von Prozessinformationen. Beispiele für solche Funktionen könnten sein:
SELECT AVG(value) AS average_temperature,
MAX(value) AS max_temperature,
MIN(value) AS min_temperature
FROM Sensor
WHERE type = "temperature"
AND timestamp BETWEEN "2023-01-01T00:00:00" AND "2023-12-31T23:59:59"
GROUP BY DATEPART(month, timestamp)

Diese Abfrage würde die durchschnittliche, maximale und minimale Temperatur für jeden Monat des Jahres 2023 berechnen.

Durch die Kombination des Typschemas und der Abfragesprache wird eine flexible und effiziente Methode zur Abfrage von Prozessinformationen geschaffen.

Das Typschema stellt sicher, dass die Datenstrukturen einheitlich und klar definiert sind, während die Abfragesprache eine präzise und leistungsfähige Abfrage dieser Daten ermöglicht. Dies reduziert den Aufwand für die Datenintegration und -verarbeitung erheblich und ermöglicht eine effizientere Nutzung der Prozessinformationen in industriellen Netzwerken.

In dem vorgestellten Verfahren zur Abfrage und Verarbeitung von Prozessinformationen in einem industriellen Prozessnetzwerk spielt die Zuweisung und Verwendung von Ressourcenkennungen eine zentrale Rolle. Diese Ressourcenkennungen dienen der eindeutigen Identifikation von Datenpunkten innerhalb des Netzwerks.

Jedem Datenpunkt im Prozessnetzwerk wird eine eindeutige Ressourcenkennung zugewiesen. Diese Kennung folgt einem standardisierten Format, das es ermöglicht, den Datenpunkt präzise zu lokalisieren und abzurufen. Ein Beispiel für eine solche Ressourcenkennung könnte folgendermaßen aussehen:
nw://device/sensor01/temperature

In diesem Beispiel identifiziert die Ressourcenkennung einen Temperatursensor mit der Bezeichnung "sensor01" auf einem bestimmten Gerät im Netzwerk.

Die Verwendung von Ressourcenkennungen bietet mehrere Vorteile: Jeder Datenpunkt im Netzwerk kann eindeutig identifiziert werden, unabhängig von seiner physischen Position oder dem Gerät, auf dem er sich befindet.

Die Ressourcenkennungen -Struktur ermöglicht eine hierarchische Organisation der Datenpunkte, was die Navigation und Abfrage erleichtert.

Die Ressourcenkennungen können über verschiedene Kommunikationsprotokolle hinweg verwendet werden, was die Flexibilität des Systems erhöht.

Der Query-Client sendet eine Anfrage in Form der Ressourcenkennung an den Query-Server. Der Query-Server interpretiert diese Ressourcenkennung und sendet die entsprechende Prozessinformation zurück.

Ein typischer Ablauf könnte wie folgt aussehen:
1. Der Query-Client formuliert eine Anfrage unter Verwendung der Abfragesprache und der entsprechenden Ressourcenkennung.
2. Die Anfrage wird an den Query-Server gesendet.
3. Der Query-Server interpretiert die Ressourcenkennung und lokalisiert den entsprechenden Datenpunkt im Produzenten, da der Server auf dem Gerät läuft und nur die URI interpretiert und bedient, wird er nicht mit dem Netzwerk interagieren.
4. Der Query-Server ruft die angeforderte Prozessinformation ab, unter Verwendung von Produzenten-internen Datenschnittstellen.
5. Die Prozessinformation wird an den Query-Client zurückgesendet.

Durch diesen Mechanismus wird eine effiziente und präzise Abfrage von Prozessinformationen ermöglicht, ohne dass der Query-Client detaillierte Kenntnisse über die interne Struktur des Netzwerks oder die spezifische Implementierung der Datenspeicherung benötigt.

Die Verwendung von Ressourcenkennungen in Verbindung mit dem Query-Client und Query-Server bildet somit eine flexible und leistungsfähige Grundlage für die Abfrage und Verarbeitung von Prozessinformationen in industriellen Prozessnetzwerken.

Der Query-Client und der Query-Server sind zentrale Komponenten des vorgestellten Verfahrens zur Abfrage und Verarbeitung von Prozessinformationen in industriellen Prozessnetzwerken. Diese Komponenten arbeiten zusammen, um eine effiziente und flexible Kommunikation zwischen Konsumenten und Produzenten von Prozessinformationen zu ermöglichen.

Der Query-Client wird auf einem Konsumenten betrieben und ist für die Formulierung und Übermittlung von Abfragen zuständig. Ein wesentlicher Bestandteil des Query-Clients ist ein Abfragesprache-Interpreter. Dieser Interpreter empfängt Abfragen von Prozessinformationen, die in der spezifischen Abfragesprache formuliert sind. Basierend auf diesen Abfragen generiert der Interpreter entsprechende Ressourcenkennungen. Diese Ressourcenkennungen dienen als eindeutige Identifikatoren für die angefragten Prozessinformationen im Netzwerk.

Ein weiterer wichtiger Bestandteil des Query-Clients ist der Forwarder. Der Forwarder verarbeitet die vom Abfragesprache-Interpreter generierten Ressourcenkennungen. Seine Aufgabe besteht darin, die Abfragen an die entsprechenden Protokolladapter weiterzuleiten. Dies ermöglicht eine flexible Kommunikation über verschiedene Netzwerkprotokolle hinweg, wobei eine Vorfilterung möglich wäre, Werte "Timestamp-latest" werden direkt von Profinet abgefragt und historische Werte z.B. über http.

Auf der Seite des Produzenten wird ein Query-Server betrieben. Der Query-Server ist für die Verarbeitung der eingehenden Abfragen und die Bereitstellung der angeforderten Prozessinformationen verantwortlich. Ein zentraler Bestandteil des Query-Servers ist der Ressourcenkennungen-Interpreter. Dieser Interpreter empfängt die vom Query-Client übermittelten Ressourcenkennungen und übersetzt diese in systemspezifische Adressen oder Identifikatoren.

Der Query-Server verfügt zudem über einen Schema-Type-Resolver. Diese Komponente überprüft, ob die angefragten systemspezifischen Adressen dem definierten Typschema entsprechen. Dies stellt sicher, dass nur gültige und konsistente Daten zurückgegeben werden.

Eine besondere Funktionalität des Query-Servers ist die Fähigkeit, Aggregations- und statistische Analysefunktionen auf die abgefragten Daten anzuwenden, bevor die Ergebnisse an den Query-Client zurückgesendet werden. Dies ermöglicht eine effiziente Verarbeitung und Aufbereitung der Daten direkt am Ort ihrer Entstehung, was den Datenverkehr im Netzwerk reduzieren und die Verarbeitungszeit auf Seiten des Konsumenten verkürzen kann.

Der Ablauf einer typischen Abfrage gestaltet sich wie folgt:
1. Eine Anwendung auf dem Konsumenten formuliert eine Abfrage unter Verwendung der definierten Abfragesprache.
2. Der Abfragesprache-Interpreter des Query-Clients empfängt diese Abfrage und generiert daraus eine oder mehrere Ressourcenkennungen.
3. Der Forwarder des Query-Clients verarbeitet diese Ressourcenkennungen und leitet die Abfrage an die entsprechenden Protokolladapter weiter.
4. Die Abfrage wird über das Netzwerk an den Query-Server des Produzenten übermittelt.
5. Der Ressourcenkennungen-Interpreter des Query-Servers empfängt die Abfrage und übersetzt die Ressourcenkennungen in systemspezifische Adressen.
6. Der Schema-Type-Resolver überprüft die Gültigkeit der Abfrage anhand des definierten Typschemas.
7. Der Query-Server ruft die angeforderten Prozessinformationen ab und wendet gegebenenfalls Aggregations- oder Analysefunktionen an.
8. Die aufbereiteten Prozessinformationen werden über das Netzwerk zurück an den Query-Client gesendet.
9. Der Query-Client empfängt die Daten und stellt sie der anfragenden Anwendung zur Verfügung.

Durch diese Architektur und Funktionsweise ermöglichen der Query-Client und der Query-Server eine flexible, effiziente und standardisierte Abfrage und Verarbeitung von Prozessinformationen in industriellen Prozessnetzwerken. Die Verwendung von Ressourcenkennungen und die Möglichkeit zur Datenaufbereitung direkt auf dem Produzenten tragen zu einer optimierten Netzwerknutzung und verbesserten Skalierbarkeit bei.

Das Index-Register und der Protokolladapter sind wesentliche Komponenten des vorgestellten Verfahrens zur effizienten Abfrage und Verarbeitung von Prozessinformationen in industriellen Prozessnetzwerken. Das Index-Register wird auf dem Produzenten betrieben und dient der Verwaltung und Indizierung von Ressourcenkennungen (URIs). Eine Hauptfunktion des Index-Registers besteht darin, eine Mapping-Tabelle zu erstellen und zu verwalten. In dieser Tabelle werden die Ressourcenkennungen den entsprechenden Datenpunkten zugeordnet. Dies ermöglicht eine effiziente Lokalisierung und Abfrage von Prozessinformationen im Netzwerk.

Die Struktur der Mapping-Tabelle könnte beispielsweise folgendermaßen aussehen:

| Ressourcenkennung (URI) | Datenpunkt | Typ | Adresse |
|---|---|---|---|
| nw://device1/sensor1/temperature | Temperatur Sensor 1 | float | 0x1234 |
| nw://device1/actuator1/valve | Ventil Aktor 1 | boolean | 0x5678 |

Diese Tabelle ermöglicht eine schnelle Zuordnung von URIs zu den entsprechenden Datenpunkten und deren spezifischen Eigenschaften.

Ein Protokolladapter ist eine Komponente, die es ermöglicht, die Ressourcenkennungen zur Kommunikation über verschiedene Netzwerkschnittstellen zu verwenden. Der Adapter unterstützt unterschiedliche Protokolle wie Profinet (PN), HTTP und MQTT. Für jedes dieser Protokolle verwendet der Protokolladapter spezifische Methoden zur Kommunikation.

Für Profinet könnte der Protokolladapter beispielsweise die Ressourcenkennung in eine entsprechende Profinet-Adresse umwandeln und die Daten über das Profinet-Protokoll abrufen. Bei HTTP könnte der Adapter die URI in eine HTTP-GET-Anfrage umwandeln, während bei MQTT die URI als Topic für eine Publish/Subscribe-Kommunikation verwendet werden könnte.

Ein Beispiel für die Funktionsweise des Protokolladapters:
1. Der Protokolladapter erhält eine Anfrage mit der URI "nw://device1/sensor1/temperature".
2. Der Adapter erkennt anhand der Netzwerkkonfiguration, dass "device1" über Profinet erreichbar ist.
3. Der Adapter wandelt die URI in eine Profinet-spezifische Adressierung um.
4. Die Anfrage wird über das Profinet-Protokoll an das Zielgerät gesendet.
5. Die empfangenen Daten werden vom Adapter in ein standardisiertes Format umgewandelt und an den Anfragenden zurückgegeben.

Durch diese Flexibilität ermöglicht der Protokolladapter eine nahtlose Kommunikation über verschiedene Netzwerkprotokolle hinweg, ohne dass der Anfragende die spezifischen Details der unterschiedlichen Protokolle kennen muss.

Die Kombination aus Index-Register und Protokolladapter bietet mehrere Vorteile:
Das Index-Register ermöglicht eine schnelle Zuordnung von URIs zu Datenpunkten.

Der Protokolladapter abstrahiert die Komplexität verschiedener Netzwerkprotokolle.

Neue Geräte und Protokolle können einfach in das System integriert werden.

Die Verwendung von URIs ermöglicht eine einheitliche Adressierung über verschiedene Netzwerke und Protokolle hinweg.

Zusammenfassend bilden das Index-Register und der Protokolladapter eine leistungsfähige Infrastruktur für die effiziente Verwaltung und Abfrage von Prozessinformationen in heterogenen industriellen Netzwerken.

Die Erfindung bietet zahlreiche Möglichkeiten für Varianten und Erweiterungen, die es ermöglichen, das System an verschiedene industrielle Umgebungen und Anforderungen anzupassen. Eine mögliche Erweiterung des Query-Servers ist die Implementierung eines Cache-Speichers. Dieser Cache-Speicher kann häufig abgefragte Prozessinformationen zwischenspeichern, um die Antwortzeit bei wiederholten Abfragen zu reduzieren. Dies ist besonders nützlich in Umgebungen, in denen bestimmte Prozessinformationen häufig abgefragt werden, aber sich nicht ständig ändern. Der Cache-Speicher kann so konfiguriert werden, dass er Daten für einen bestimmten Zeitraum speichert oder sie aktualisiert, wenn sich die zugrunde liegenden Informationen ändern.

Eine weitere Erweiterungsmöglichkeit besteht darin, die Fähigkeit zu implementieren, IDs und deren Typen in einem Dateiformat für Drittanwendungen zu exportieren. Dies ermöglicht eine einfache Integration mit externen Systemen und Anwendungen, die möglicherweise nicht direkt mit dem Query-Client kommunizieren können. Der Export könnte in standardisierten Formaten wie JSON oder XML erfolgen, was die Interoperabilität mit einer Vielzahl von Systemen gewährleistet. Das erhöht auch Testbarkeit der Zielapplikation, da die Datenschnittstelle Hardware-unabhängig ist.

Ein Schema-Type-Resolver kann im Query-Server betrieben werden, vorzugsweise auf dem Produzenten. Diese Komponente ist dafür verantwortlich, die Prozessinformationen in einem definierten Zielformat darzustellen. Dies ermöglicht eine flexible Anpassung der Datenausgabe an die Anforderungen verschiedener Konsumenten. Der Schema-Type-Resolver kann beispielsweise Datentypen konvertieren, Einheiten umrechnen oder komplexe Datenstrukturen in einfachere Formate umwandeln.

Die Verwendung einer Engineering-Software, wie beispielsweise TIA Portal, für die Konfiguration des Produzenten bietet eine benutzerfreundliche Möglichkeit, das System an spezifische industrielle Umgebungen anzupassen. Diese Software kann verwendet werden, um Geräte zu konfigurieren, Netzwerktopologien zu definieren und Ressourcenkennungen zuzuweisen. Die Integration mit einer solchen Engineering-Software ermöglicht eine nahtlose Einbindung der Erfindung in bestehende Automatisierungsumgebungen.

Das System kann auch erweitert werden, um verschiedene Sicherheitsmechanismen zu implementieren. Dies könnte die Verschlüsselung der Kommunikation zwischen Query-Client und Query-Server, die Implementierung von Zugriffskontrollen für bestimmte Ressourcenkennungen oder die Integration mit bestehenden Authentifizierungssystemen umfassen.

Eine weitere mögliche Erweiterung ist die Implementierung von Mechanismen zur dynamischen Entdeckung von Ressourcen im Netzwerk. Dies würde es dem System ermöglichen, neue Geräte oder Datenpunkte automatisch zu erkennen und in das Index-Register aufzunehmen, ohne dass eine manuelle Konfiguration erforderlich ist.

Die Abfragesprache könnte erweitert werden, um komplexere Abfragen zu ermöglichen, wie beispielsweise die Aggregation von Daten über mehrere Datenpunkte hinweg oder die Anwendung von Filterfunktionen direkt in der Abfrage. Dies würde die Flexibilität und Leistungsfähigkeit des Systems weiter erhöhen.

Schließlich könnte das System um Funktionen zur Datenvisualisierung und -analyse erweitert werden. Dies könnte die Integration von Dashboards oder Reporting-Tools umfassen, die die abgefragten Prozessinformationen in leicht verständliche visuelle Formate umwandeln.

Diese Varianten und Erweiterungen zeigen die Flexibilität und Anpassungsfähigkeit der Erfindung an verschiedene industrielle Umgebungen und Anforderungen. Sie ermöglichen eine kontinuierliche Weiterentwicklung und Optimierung des Systems, um den sich ändernden Bedürfnissen in der industriellen Automatisierung gerecht zu werden.

Die Flexibilität und Anpassungsfähigkeit der Erfindung ermöglichen ihren Einsatz in verschiedenen industriellen Umgebungen, von der Temperaturüberwachung in Chemiefabriken bis hin zur Qualitätskontrolle in der Lebensmittelproduktion. Die Integration von Kl-Modulen zur Analyse und Vorhersage basierend auf historischen Datenpunkten eröffnet neue Möglichkeiten für die Prozessoptimierung und präventive Wartung.

Im Folgenden werden konkrete Beispiele und Anwendungsfälle für die Verwendung der Erfindung in verschiedenen industriellen Szenarien präsentiert:
Temperaturüberwachung in einer Chemiefabrik:
In einer Chemiefabrik werden mehrere Temperatursensoren eingesetzt, um kritische Prozesse zu überwachen. Eine Anwendung auf einem Konsumenten fragt mithilfe des Query-Clients gleichzeitig die Ressourcenkennungen mehrerer Temperatursensoren ab. Der Query-Client aggregiert die Antworten zu einer Gesamtantwort, die einen umfassenden Überblick über die Temperaturverteilung in der Anlage gibt. Dies ermöglicht eine effiziente Überwachung und schnelle Reaktion auf Temperaturänderungen.

Vorhersage von Wartungsbedarf in einer Produktionsanlage:
In einer Produktionsanlage wird ein KI-Modul eingesetzt, um den Wartungsbedarf von Maschinen vorherzusagen. Das KI-Modul analysiert historische Datenpunkte, wie Vibrationen, Temperatur und Energieverbrauch, die von verschiedenen Sensoren erfasst werden. Basierend auf diesen Daten erstellt das KI-Modul Vorhersagen für zukünftige Temperaturwerte und andere relevante Parameter. Diese Vorhersagen werden verwendet, um präventive Wartungsmaßnahmen zu planen und ungeplante Ausfallzeiten zu reduzieren.

Energiemanagement in einem Rechenzentrum:
Ein Rechenzentrum nutzt eine Anwendung auf einem Konsumenten, um Prozessinformationen über den Energieverbrauch verschiedener Serverracks abzufragen. Die Anwendung verwendet den Query-Client, um Daten von Stromzählern, Temperatursensoren und Kühlsystemen abzurufen. Durch die Aggregation dieser Daten kann das Rechenzentrum seinen Energieverbrauch optimieren und die Kühleffizienz verbessern.

Qualitätskontrolle in der Lebensmittelproduktion:
In einer Lebensmittelfabrik wird ein KI-Modul eingesetzt, um die Qualität der produzierten Waren zu überwachen und vorherzusagen. Das KI-Modul analysiert Prozessinformationen wie Temperatur, Feuchtigkeit und Verarbeitungszeiten. Basierend auf historischen Datenpunkten erstellt das KI-Modul Vorhersagen für die zu erwartende Produktqualität. Diese Vorhersagen ermöglichen es, Prozessparameter proaktiv anzupassen und die Produktqualität konstant hochzuhalten.

Logistikoptimierung in einem Verteilzentrum:
Ein Verteilzentrum verwendet eine Anwendung auf einem Konsumenten, um Prozessinformationen über den Status von Förderbändern, Sortieranlagen und Lagerbeständen abzufragen. Der Query-Client der Anwendung fragt gleichzeitig mehrere Ressourcenkennungen ab, um einen Gesamtüberblick über den Materialfluss zu erhalten. Diese Echtzeitinformationen werden genutzt, um Engpässe zu identifizieren und die Logistikprozesse zu optimieren.

Diese Beispiele zeigen, wie die Erfindung in verschiedenen industriellen Umgebungen eingesetzt werden kann, um Prozesse zu überwachen, zu optimieren und vorherzusagen. Die Fähigkeit des Query-Clients, mehrere Ressourcenkennungen gleichzeitig abzufragen und die Antworten zu aggregieren, ermöglicht eine effiziente Datenerfassung. Die Verwendung von KI-Modulen zur Analyse und Vorhersage basierend auf historischen Datenpunkten bietet wertvolle Einblicke für die Prozessoptimierung und präventive Wartung.

Die vorgestellte Erfindung bietet mehrere Vorteile und technische Effekte im Vergleich zum Stand der Technik:
Erhöhte Effizienz: Durch die Verwendung des Typschemas und der Abfragesprache wird eine präzise und effiziente Abfrage von Prozessinformationen ermöglicht. Dies reduziert den Overhead bei der Datenübertragung und -verarbeitung. Die Möglichkeit, mehrere Ressourcenkennungen gleichzeitig abzufragen und die Antworten zu aggregieren, trägt zusätzlich zur Effizienzsteigerung bei.

Verbesserte Flexibilität: Die Verwendung von Ressourcenkennungen (URIs) zur Identifikation von Datenpunkten ermöglicht eine flexible Adressierung über verschiedene Netzwerkprotokolle hinweg. Der Protokolladapter unterstützt unterschiedliche Kommunikationsprotokolle, was die Integration in bestehende Systeme erleichtert.

Erhöhte Skalierbarkeit: Das Index-Register auf dem Produzenten ermöglicht eine effiziente Verwaltung und Indizierung der Ressourcenkennungen. Dies trägt zur Skalierbarkeit des Systems bei, da neue Geräte und Datenpunkte einfach hinzugefügt werden können.

Dynamische Ressourcenerkennung: Der Forwarder verwendet einen Broadcast-Request, wenn ein URI-Pfad unbekannt ist. Dies ermöglicht eine dynamische Erkennung von Ressourcen im Netzwerk, ohne dass eine manuelle Konfiguration erforderlich ist.

Optimierte Profinet-Kommunikation: Für die Profinet-Kommunikation wird Device-Access-AR, da zuerst ein writeRecord und dann ein readRecord ausgeführt wird (CLRPC, PG-Verbindung) für asynchrone Kommunikation mit einem definierten Recordindex im Adressbereich 0x0 bis 0x7FFF verwendet. Dies ermöglicht eine effiziente und standardisierte Kommunikation in Profinet-Umgebungen.

Verbesserte Interoperabilität: Durch die Verwendung standardisierter Formate für das Typschema und die Abfragesprache wird die Interoperabilität zwischen verschiedenen Geräten und Systemen verbessert.

Reduzierter Konfigurationsaufwand: Die dynamische Ressourcenerkennung und die Verwendung von URIs reduzieren den manuellen Konfigurationsaufwand bei der Integration neuer Geräte oder Datenpunkte in das Netzwerk.

Optimierte Datenverarbeitung: Die Möglichkeit, Aggregations- und Analysefunktionen direkt auf dem Produzenten auszuführen, reduziert den Datenverkehr im Netzwerk und entlastet die Konsumenten bei der Datenverarbeitung.

Verbesserte Echtzeitfähigkeit: Durch die effiziente Abfrage und Verarbeitung von Prozessinformationen wird die Echtzeitfähigkeit des Systems verbessert, was besonders in zeitkritischen industriellen Anwendungen von Vorteil ist.

Diese Vorteile und technischen Effekte tragen dazu bei, dass die vorgestellte Erfindung eine leistungsfähige und zukunftssichere Lösung für die Abfrage und Verarbeitung von Prozessinformationen in industriellen Prozessnetzwerken darstellt.

Die Zeichnung zeigt ein Ausführungsbeispiel der Erfindung. Dabei zeigt:
- FIG 1: eine Automatisierungsanordnung,
- FIG 2: ein Blockschaltbild eines Konsumenten zu einem Produzenten,
- FIG 3: ein Blockschaltbild eines Aufbaus für ein Konsumentengerät,
- FIG 4: ein Blockschaltbild für den Aufbau in einem Produzentengerät,
- FIG 5: eine Kommunikationskette für einen Konsumenten und
- FIG 6: eine Kommunikationskette für einen Produzenten.

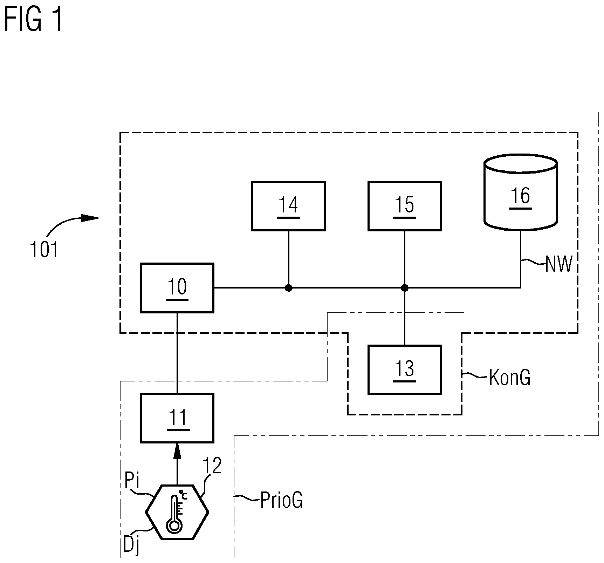

Gemäß FIG 1 ist eine Automatisierungsanordnung 101 mit einer speicherprogrammierbaren Steuerung 10, einer Eingabeeinheit 11 mit einem Temperatursensor 12, ein KI-Modul 13, ein Konfigurationstool 14, eine Edge-Anwendung 15 und eine Datenbank 16 dargestellt. All diese genannten Automatisierungskomponenten AK sind mittels eines Prozessnetzwerks NW, vorzugsweise durch Industrial-Ethernet, miteinander verbunden. Als Konsumenten Kon von Prozessinformationen Pi von der Eingabeeinheit 11, beispielsweise ausgestaltet als ein dezentrales ET 200 Gerät, agieren hier:

Die Datenbank 16, die Edge-Anwendung 15, das KI-Modul 13 und die speicherprogrammierbare Steuerung 10, wobei die speicherprogrammierbare Steuerung 10 auch aktiv Prozessdaten schreiben kann. Das KI-Modul 13 kann beispielsweise heute nicht ohne immensen Aufwand für Datenverarbeitung, -interpretation und -aggregation die Prozessinformationen Pi des Temperatursensors 12 in Grad Celsius abfragen. Eine Kommunikation mit der Eingabeeinheit 11 beinhaltet entweder eine Unter- oder eine Überabfrage.

Die Automatisierungsanordnung 101 gemäß FIG 1 untergliedert ihre Automatisierungskomponenten AK in eine Konsumenten-Gruppe KonG und in eine Produzenten-Gruppe ProG.

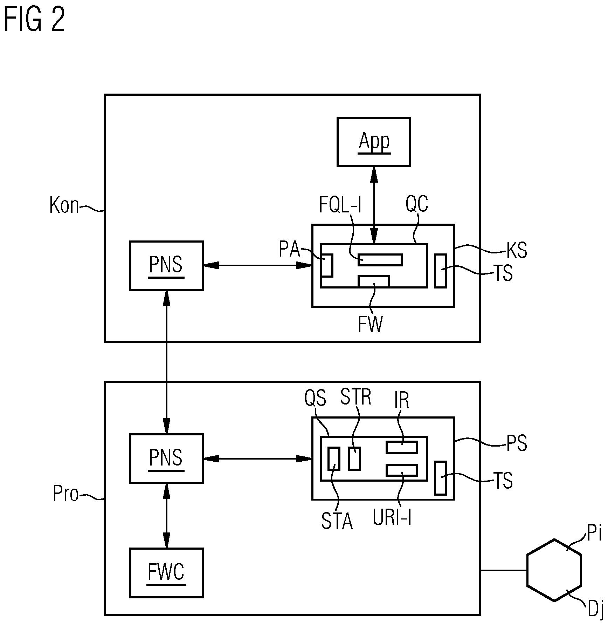

Durch eine Implementierung von einen Konsumenten Kon und einen Produzenten Pro kann das mit FIG 1 aufgezeigte Problem gelöst werden. Dazu ist in der FIG 2 ein Blockschaltbild eines Konsumenten Kon und eines Produzenten Pro dargestellt. Auf dem Konsumenten Kon ist ein Query-Client QC innerhalb einer Software-Umgebung KS implementiert. In der Software-Umgebung KS ist weiterhin eine Typschema TS zur Definition einer Struktur des Datenverbundes von Datenpunkten Dj und deren Attribute festgelegt. Zusätzlich ist eine Abfragesprache FQL in dem Query-Client QC festgelegt. Der Produzent Pro weist ebenfalls eine Software-Umgebung PS des Produzenten Pro auf. In dieser Software-Umgebung PS ist auch das Typschema TS zur Definition der Struktur des Datenverbundes der Datenpunkte Dj festgelegt. Ebenfalls ist die Abfragesprache FQL in der Software-Umgebung PS des Produzenten Pro implementiert. Der Konsument Kon weist eine Applikation App auf und ist ausgestaltet die Applikation App zum Ablauf zu bringen, wobei die Applikation App wiederum ausgestaltet ist, mittels des Query-Client QC die Prozessinformationen Pi von dem Produzenten Pro abzufragen. Der Konsument Kon und der Produzent Pro sind jeweils über ein Profinet-Stack PNS miteinander kommunikationstechnisch über das Prozessnetzwerk NW verbunden. Bei dem Konsumenten Kon handelt es sich um einen Profinet-Stack PNS nach Controller oder Supervisor-Art. Bei dem Profinet-Stack PNS auf dem Produzenten Pro handelt es sich um einen Profinet-Device-Stack.

Mit der FIG 2 wird prinzipiell eine Software-Implementierung eines Abfrage-basierten Kommunikationsmechanismus zwischen OT- und IT-Geräten/Applikationen realisiert. Mit den in dem Blockschaltbild aufgezeigten Komponenten kann man ein Verfahren zur Abfrage und Verarbeitung von Prozessinformationen Pi innerhalb des industriellen Prozessnetzwerkes NW durchführen.

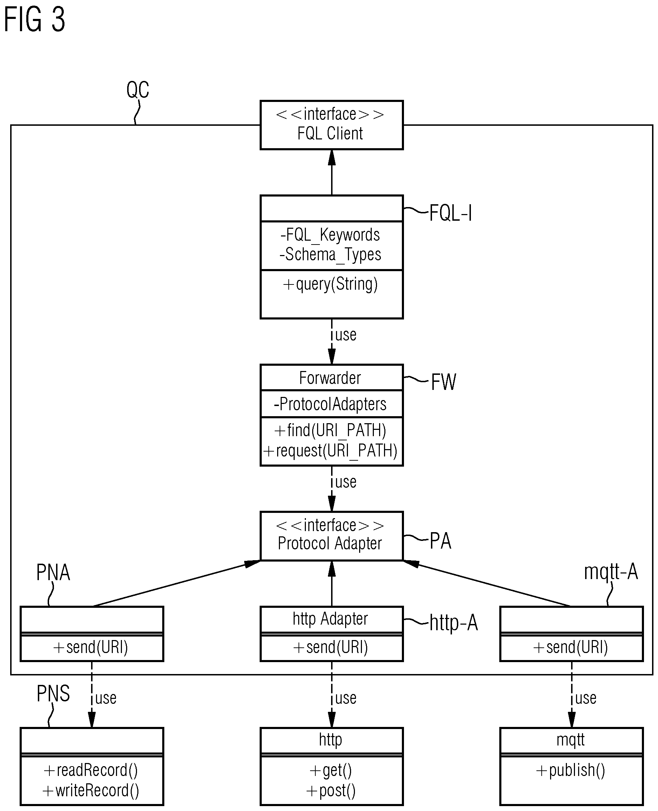

Mit der FIG 3 wird aufgezeigt, wie in einem Konsumentengerät Kon ein Query-Client QC des Konsumenten Kon realisiert werden muss. Der Query-Client QC hat als Interface für einen FQL-Client einen Zugang zu einem Abfragesprache-Interpreter FQL-I. Dieser kann über einen Forwarder FW über einen Protokolladapter PA entweder einen Profinet-Adapter PNA oder einen http-Adapter http-A oder einen Datenbank-Adapter mqtt-A auf die entsprechenden Stacks, nämlich Profinet-Stack PNS oder http-Stack oder mqtt-Stack zugreifen.

Der Abfragesprache-Interpreter FQL-I interpretiert eine FQL-Abfrage in der Abfragesprache FQL auf Basis der Abfragesprache Schlüsselwörter und bildet einen Pfad für eine Ressourcenkennung URI.

Der Forwarder FW verwaltet alle Ressourcenkennungen URI. Wenn der Forwarder FW eine neue Ressourcenkennung URI erhält, sucht er eine passende vollständige Ressourcenkennung URI und stellt eine Anfrage über den Protokolladapter PA.

Der Protokolladapter PA erhält eine vollständige Ressourcenkennung URI und leitet sie an den entsprechenden Client weiter. Jeder Protokolladapter PA arbeitet die Information entsprechend der Typdefinition ab. Wird beispielsweise der Protokolladapter PA für einen Profinet-Adapter PNA verwendet kann hierfür die Methode DeviceAccess-AR read (CLRPC,PG-Verbindung) für asynchrone Kommunikation mit einem definierten Recordindex im Adressbereich 0X0 bis 0X7ff verwendet werden. Die Methode "DeviceAccess-AR" kann verwendet werden, da der FQL-Client zuerst ein writeRecord und dann ein readRecord ausführt.

Der Protokolladapter PA erhält eine Anfrage mit der Resourcenkennung URI "profinet://device1/sensor1/temperature".

Der Protokolladapter PA erkennt anhand der Netzwerkkonfiguration, dass "device1" über Profinet erreichbar ist.

Der Protokolladapter PA wandelt die Resourcenkennung URI in eine Profinet-spezifische Adressierung um und schreibt eine Anfrage mit der entsprechenden Resourcenkennung URI an das Zielgerät (write Record).

Die Anfrage wird über das Profinet-Protokoll an das Zielgerät gesendet. Das Zielgeräte prüft die Anfrage auf Realisierbarkeit und quittiert.

Das Ergebnis der Quittierung wird an den Forwarder FW weitergeleitet und dort für die Resourcenkennung URI hinterlegt.

Sofern die Anfrage erfolgreich war, liest der Protokolladapter die angefragten Informationen von der entsprechenden Profinet-Adresse.

Die empfangenen Daten werden vom Protokolladapter PA in ein standardisiertes Format umgewandelt und an den Anfragenden zurückgegeben.

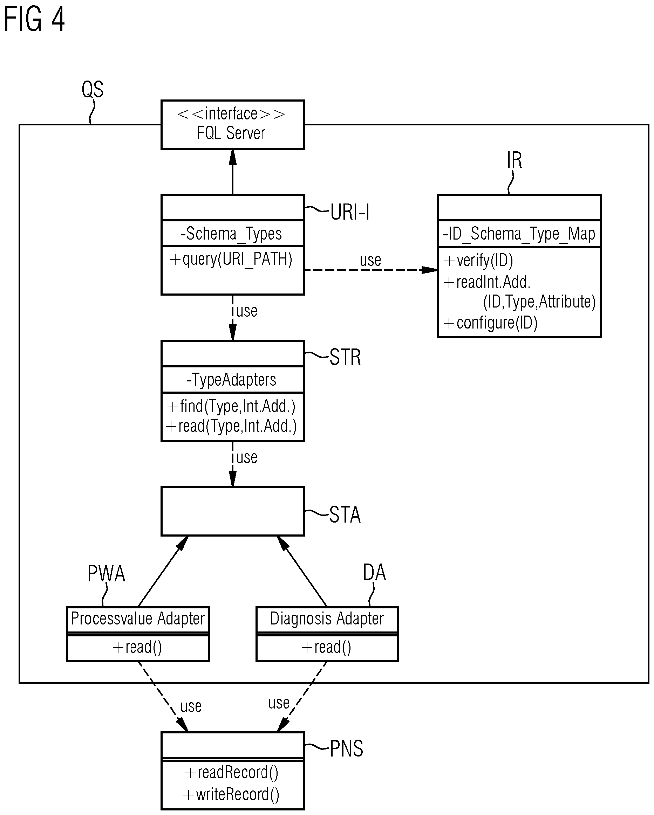

Mit der FIG 4 wird ein ähnliches Blockschaltbild für einen Produzenten Pro mit einem Query-Server QS des Produzenten Pro dargestellt. Der Produzent Pro bzw. der Query-Server QS besitzt einen FQL-Server, der im Wesentlichen zur Beantwortung von Ressourcenkennungen URI Anfragen dient. Sofern ein FQL-Record über Profinet mit einer Ressourcenkennung URI geschrieben wird, wird diese Ressourcenkennung URI an den FQL-Server übergeben. Dazu weist der Query-Server QS einen Ressourcenkennung-Interpreter URI-I auf. Der Ressourcenkennung-Interpreter URI-I benötigt nur die Ressourcenkennung URI als Pfad und interpretiert diesen String auf Basis der Typschema TS Definition. Ein Index-Register IR verwaltet und konfiguriert alle eindeutigen Zuweisungen, insbesondere ID's, entsprechend der Typen-Definition unter vorliegenden Datenpunkten auf einem Gerät.

Ein Schema-Typ-Resolver STR dient zur Abfrage einer ID und eines Typs und konvertiert Rückgabewerte in ein definiertes Zielformat für eine Konsumenten-Applikation. Die Umwandlung erfolgt auf Parameter, die bei der Konfiguration übertragen werden. Damit kann beispielsweise eine Umwandlung von Bitwerten in Flotwerte oder in eine Zeichenkette etc. umgesetzt werden. Der Schema-Typ-Resolver STR greift wiederum auf einen Schematyp-Adapter STA zu. Dieser kann wiederum auf einen Prozesswert-Adapter PWA oder auf einen Diagnose-Adapter DA zugreifen. Letztendlich werden die Datenwerte mittels readRecord () über einen Profinet-Stack PNS geholt.

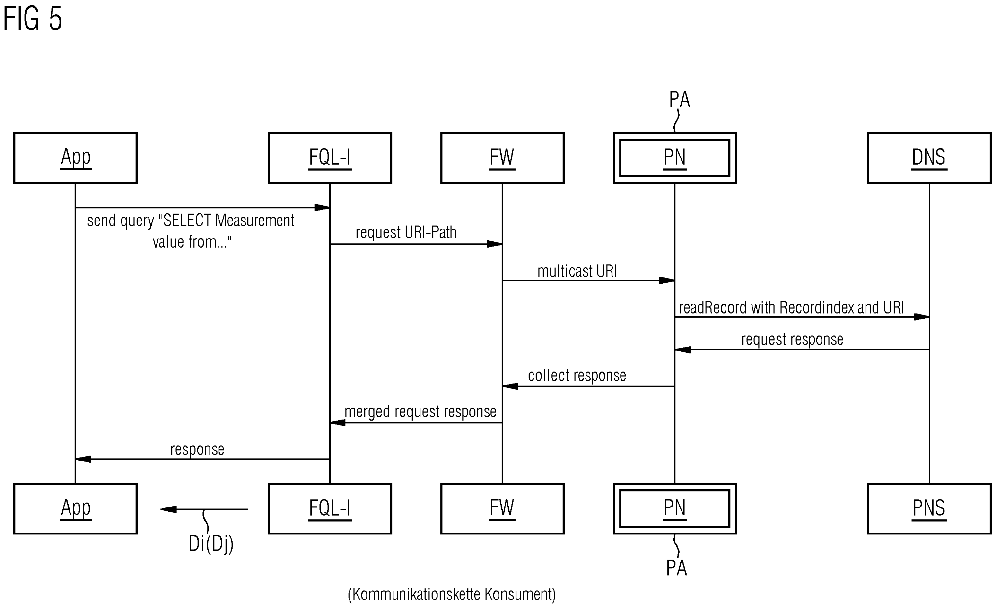

Mit der FIG 5 wird eine Kommunikationskette in einen Konsumenten Kon dargestellt. Der Signalflussplan gemäß FIG 5 stellt die Kommunikation zwischen den Komponenten eines Konsumenten Kon dar. Dabei sendet beispielhaft eine Applikation App, insbesondere eine Dashboard-Applikation, einen FQL-Abfragestring über das FQL-Client-Interface und ruft damit den Interpreter, nämlich den Abfragesprache-Interpreter FQL-I auf. Der Abfragesprache-Interpreter-Interpreter FQL-I entwirft die Ressourcenkennung URI als einen URI-Pfad und gibt diesen an den Forwarder FW weiter. Sofern dieser URI-Pfad, also die Ressourcenkennung URI, für den Forwarder FW unbekannt ist, stellt der Forwarder FW einen Broadcast-Request an alle verfügbaren Teilnehmer. Andernfalls erstellt der Forwarder FW eine Anfrage an die relevanten Teilnehmer. Über den Profinet-Adapter PNA bzw. über den Profinet-Stack PNS wird die Ressourcenkennung URI entsprechend den Vorgaben der Profinet-Schnittstellen gesendet und es wird eine Antwort zurückerhalten. Der Forwarder FW sammelt alle Antworten der Kommunikationsteilnehmer ein und messaged diese Antworten in ein standardisiertes Format. Dies wird letztendlich dem Abfragesprache-Interpreter FQL-I zurückgegeben und schließlich wird der Prozesswert Pi bzw. der Datenpunkt Dj an die Applikation App weitergegeben.

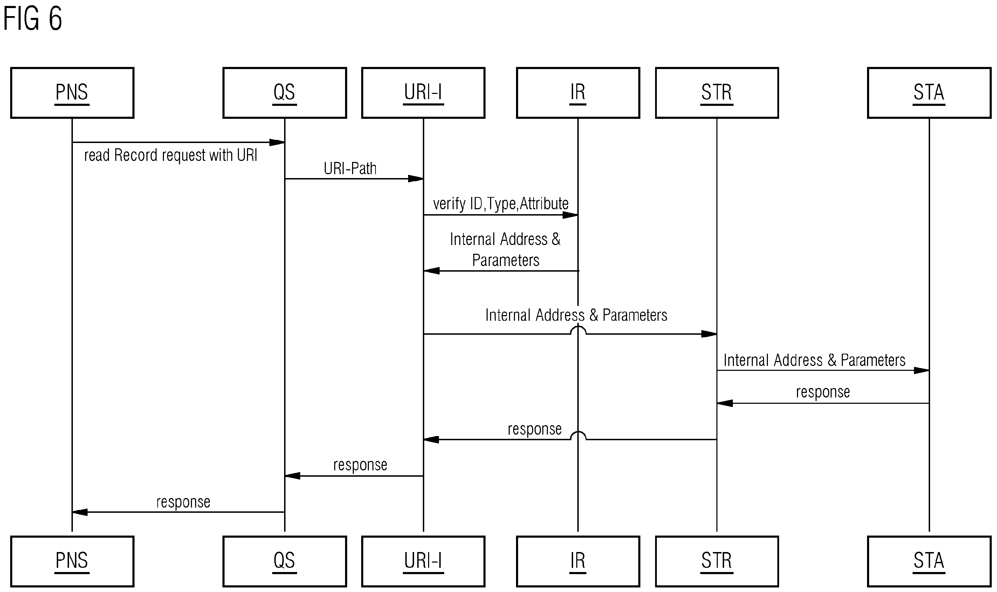

Die FIG 6 beschreibt die Kommunikationskette innerhalb eines Produzenten Pro, beispielsweise ist eine ET200 IM als dezentrale Peripherie, als Produzent Pro ausgestaltet und enthält somit einen Query-Server QS. Das bedeutet, diese Automatisierungskomponente der dezentralen Peripherie erhält zusätzlich zur Firmeware einen FQL-Server. In dieser Funktionalität erhält der Server eine Ressourcenkennung URI Abfrage auf einen read Record Request eines Konsumenten Kon.

Weitere Definitionen und Erläuterungen:
Das Typenschema TS in diesem Kontext ist ein strukturiertes Rahmenwerk, das die Datentypen und Attribute für die Prozessinformationen Pi im industriellen Automatisierungsnetzwerk definiert. Vorgegeben werden Definition von Datentypen für verschiedene Prozessinformationen (z.B. Integer, Float, Boolean, String, etc.). Die Attribute für jede Art von Prozessinformation Pj z.B. Einheit, Wertebereich, Zeitstempel, Genauigkeit werden festgelegt. Eine Hierarchische Strukturierung von Daten wird festgelegt, um Beziehungen zwischen verschiedenen Informationstypen abzubilden.

Eine Spezifikation von Metadaten für jede Dateninstanz z.B. Gerätename, Sensortyp, Standort wird eingeführt. Definition von eindeutigen Identifikatoren IDs für Dateninstanzen innerhalb des Netzwerks werden festgelegt.

Das Typenschema TS bildet die Grundlage für die einheitliche Darstellung und Verarbeitung von Daten im gesamten System und ermöglicht eine konsistente Interpretation der Prozessinformationen Pi über verschiedene Komponenten und Anwendungen hinweg.

Der Indexer bzw. das Index-Register IR realisiert folgende Funktionen:
Verwalten von Resourcenkennungen URIs auf den Produzentengeräten: Das Index-Register IR ist verantwortlich für die Organisation und Verwaltung der Resourcenkennungen URIs oder auch Uniform Resource Identifiers genannt auf den Geräten, die die Daten oder Prozessinformationen Pi produzieren. Das Index-Register IR empfängt interne Adressen und Parameter vom dem Resourcenkennungen-Interpreter URI-I und verarbeitet diese Informationen weiter. Nach der Verarbeitung leitet das Index-Register IR die relevanten Informationen an den Schema-Type-Resolver STR weiter. Das Index-Register IR kann Daten zwischenspeichern, um schnellere Zugriffe auf häufig abgefragte Informationen zu ermöglichen.

Durch effiziente Indexierung kann das Index-Register IR die die Geschwindigkeit von Datenzugriffen und -abfragen im System verbessern. Das Index-Register IR die hilft dabei, die physische oder logische Position von Daten im Netzwerk zu bestimmen.

Der Schema-Type Resolver STR erfüllt folgende Funktionen:
Der Schema-Type Resolver STR interpretiert die Datentypen, die in den Anfragen und Datenstrukturen verwendet werden.

Er löst die spezifischen Typinformationen auf, die für die Verarbeitung der Daten erforderlich sind. Der Schema-Type Resolver STR fungiert als Vermittler, indem er Informationen vom Index-Register IR empfängt und an den Schema-Type-Adapter STA weiterleitet. Er überprüft, ob die angeforderten oder übermittelten Daten dem definierten Typenschema entsprechen.

Falls erforderlich, kann der Schema-Type Resolver STR Datentypen konvertieren, um Kompatibilität zwischen verschiedenen Systemkomponenten sicherzustellen.

Der Abfragesprache-Interpreter FQL-I erfüllt folgende Funktionen:
Der Abfragesprache-Interpreter FQL-empfängt und verarbeitet Abfragen, die in der Feldgeräte-Abfragesprache (FQL) formuliert sind. Er analysiert die Syntax der eingehenden FQL-Abfragen, um sicherzustellen, dass sie korrekt formuliert sind. Der Abfragesprache-Interpreter FQLüberprüft die Bedeutung und Logik der Abfragen, um ihre Gültigkeit im Kontext des Systems zu gewährleisten. Basierend auf der FQL-Abfrage generiert der Interpreter URI-Pfade, die zur Lokalisierung der angeforderten Daten verwendet werden.

Der Abfragesprache-Interpreter FQL-I versteht und verarbeitet verschiedene Abfrageoperationen wie SELECT, WHERE, JOIN etc. Er bildet die Schnittstelle zwischen der Benutzeranwendung (z.B. Dashboard bzw. eine beliebige Applikation App) und dem internen Abfragesystem.

Der Ressourcenkennungen-Interpreter URI-I erfüllt folgende Funktionen: Ressourcenkennungen-Interpreter URI-I empfängt Ressourcenkennungen URI Abfragen. Er zerlegt und analysiert die Struktur der empfangenen URIs. Er überprüft die ID, den Typ und die Attribute, die in der URI enthalten sind.

Weitere Ideen zu Verfahren sind folgende:
- Verfahren, bei dem Informationen eines Prozesswertes mit unterschiedlichen Zeitwerten auf verschiedenen Produzenten adressiert werden kann. (Das Zusammenspiel aus Type Schema und URI). Der Zeitwert ist dabei Teil des Indexes und führt dazu, dass Werte eines Prozesseingangs auf verschiedenen Geräten adressiert werden können und trotzdem eindeutig sind. Dieser Mechanismus ist schon mit MQTT umsetzbar.
- Das Zusammenspiel mit FQL führt auch dazu, dass kein Produzent den "Query" string interpretieren muss, sondern nur eine URI. Das braucht insgesamt weniger Performance, da kein FQL-Interpreter gebaut wird und der URI-String kürzer ist.

## Patentansprüche

1. Verfahren zur Abfrage und Verarbeitung von Prozessinformationen (Pi) in einem industriellen Prozessnetzwerk (NW), wobei die Prozessinformationen (Pi) einen Datenverbund von zumindest einem Datenpunkt (Dj) aufweisen, umfassend folgende Schritte:
- Implementieren eines Typschemas (TS) zur Definition einer Struktur des Datenverbundes der Datenpunkte (Dj) und deren Attribute;
- Bereitstellen einer Abfragesprache (FQL), die es ermöglicht, die Prozessinformationen (Pi) abzufragen;
- Zuweisen einer Ressourcenkennung (URI) zu jedem Datenpunkt (Dj) innerhalb des Prozessnetzwerks (NW) zur eindeutigen Identifikation;
- Betreiben eines Query-Clients (QC) auf einem Konsumenten (Kon) und eines Query Servers (QS) auf einem Produzenten (Pro) zur Verarbeitung von spezifisch gestellten Abfragen der Prozessinformationen (Pi) bzw. zur Bereitstellung der spezifisch angefragten Prozessinformationen (Pi);
- Betreiben eines Index-Registers (IR) auf dem Produzenten (Pro) zum Verwalten und Indizieren der Ressourcenkennungen (URI),
- Bereitstellen der Ressourcenkennungen (URI) durch einen Protokolladapter (PA) zur Kommunikation über verschiedene Netzwerkschnittstellen (PN,http,mqtt);
- wobei eine Applikation (App) auf dem Konsumenten (Kon) zum Ablauf gebracht wird, welche mittels des Query-Clients (QC) Prozessinformationen (Pi) abfragt.

2. Verfahren nach Anspruch 1, wobei das Typschema (TS) in einem standardisierten Format, wie YAML oder XML, definiert wird.

3. Verfahren nach Anspruch 1 oder 2, wobei die Abfragesprache (FQL) Schlüsselwörter umfasst, die es ermöglichen, spezifische Attribute der Prozessinformationen (Pi) abzufragen und zu filtern.

4. Verfahren nach einem der Ansprüche 1 bis 3, wobei der Query-Client (QC) eine Anfrage in Form der Ressourcenkennung (URI) an den Query-Server (QS) sendet, welcher die Ressourcenkennung (URI) interpretiert und die entsprechende Prozessinformation (Pi) zurücksendet.

5. Verfahren nach einem der Ansprüche 1 bis 4, wobei der Protokolladapter (PA) spezifische Methoden zur Kommunikation mit unterschiedlichen Protokollen, wie Profinet (PN), http (http) und MQTT (mqtt), verwendet.

6. Verfahren nach einem der Ansprüche 1 bis 5, wobei in dem Index-Register (IR) eine Mapping-Tabelle angelegt und die die Ressourcenkennungen (URI) den entsprechenden Datenpunkten (Dj) zuordnet zugeordnet werden.

7. Verfahren nach einem der Ansprüche 1 bis 6, wobei im Query-Server (QS), vorzugsweise auf dem Produzenten (Pro), ein Schema-Type-Resolver (STR) betrieben wird, welcher die Prozessinformationen (Pi) in einem definierten Zielformat darstellt.

8. Verfahren nach einem der Ansprüche 1 bis 7, wobei der Query-Client (QC) mehrere Ressourcenkennungen (URI) gleichzeitig abfragt und die Antworten zu einer Gesamtantwort aggregiert.

9. Verfahren nach einem der Ansprüche 1 bis 8, wobei die Prozessinformationen (Pi) von einem KI-Modul (KI) analysiert werden, um Vorhersagen basierend auf historischen Datenpunkten (Dj) zu erstellen.

10. Automatisierungsanordnung (101) umfassend
- ein Prozessnetzwerk (NW),
- eine Mehrzahl von Automatisierungskomponenten (AK),
wobei zumindest eine Automatisierungskomponenten (AK) als ein Konsument (Kon) und eine weitere Automatisierungskomponenten (AK) als ein Produzent (Pro) von Prozessinformationen (Pi), welche einen Datenverbund von zumindest einen Datenpunkt (Dj) aufweisen, ausgestaltet sind,
- ein Query-Client (QC) auf dem Konsumenten (Kon),
- ein Query-Server (QS)auf dem Produzenten (Pro),
- eine Software-Umgebung (KS) auf dem Konsumenten (Kon), in welcher ein Typschema (TS) zur Definition einer Struktur des Datenverbundes der Datenpunkte (Dj) und deren Attribute und eine Abfragesprache (FQL) festgelegt sind,
- eine Software-Umgebung (PS) auf dem Produzenten (Pro), in welcher ebenfalls das Typschema (TS) zur Definition der Struktur des Datenverbundes der Datenpunkte (Dj) und deren Attribute und die Abfragesprache (FQL) festgelegt sind,
- wobei die Abfragesprache (FQL) ausgestaltet ist, es zu ermöglichen, die Prozessinformationen (Pi) abzufragen, weiterhin aufweisend,
- ein Index-Register (IR) auf dem Produzenten (Pro) ausgestaltet zum Verwalten und Indizieren von Ressourcenkennungen (URI), wobei die Ressourcenkennungen (URI) den Datenpunkten (Dj) innerhalb des Prozessnetzwerks (NW) zugewiesen sind,
- ein Protokolladapter (PA) auf dem Konsumenten (Kon), ausgestaltet die Ressourcenkennungen (URI) zur Kommunikation über verschiedene Netzwerkschnittstellen (PN,http,mqtt) bereitzustellen;
- wobei der Konsument (Kon) eine Applikation (App) aufweist und ausgestaltet ist die Applikation (App) zum Ablauf zu bringen, wobei die Applikation wiederum ausgestaltet ist mittels des Query-Clients (QC) die Prozessinformationen (Pi) vom Produzenten (Pro) abzufragen.

11. Automatisierungsanordnung (101) nach Anspruch 10, wobei der Query-Client (QC) einen Abfragesprache-Interpreter (FQL-I) und einen Forwarder (FW) aufweist, der Abfragesprache-Interpreter (FQL-I) ist ausgestaltet die Abfrage der Prozessinformationen (Pi) mit der Abfragesprache (FQL) zu empfangen und basierend auf der Abfrage die Ressourcenkennungen (URI) zu generieren, dabei ist der Forwarder (FW) dazu ausgestaltet die Ressourcenkennungen (URI) zu verarbeiten und die Abfrage an die entsprechenden Protokolladapter (PA) weiterzuleiten.

12. Automatisierungsanordnung (101) nach Anspruch 10 oder 11, wobei der Query-Server (QS) einen Ressourcenkennungen-Interpreter (URI-I) und einen Schema-Type-Resolver (STR) aufweist, der Ressourcenkennungen-Interpreter (URI-I) ist ausgestaltet die Ressourcenkennungen (URI) in systemspezifische Adressen zu übersetzen, dabei ist der Schema-Type-Resolver (STR) ausgestaltet zu überprüfen, ob die angefragten systemspezifischen Adressen dem definierten Typschema (TS) entsprechen.

13. Automatisierungsanordnung (101) nach Anspruch 12, wobei der Query-Server (QS) ein Index-Registers (IR) zum Verwalten und Indizieren der Ressourcenkennungen (URI) aufweist.
